# EUROPEAN PATENT APPLICATION

(11) **EP 4 447 003 A1**
(43) Date of publication of application: **16.10.2024**
(21) Application number: 23305546.6
(22) Date of filing: 12.04.2023
(51) Int. Cl.: G06V 20/40, G06V 20/70

(54) **METHOD OF DETERMINING SEGMENTATION MASK, DEVICE, SYSTEM DATA, DATA STRUCTURE AND NON-TRANSITORY STORAGE MEDIUM**

(71) Applicant: Beijing Xiaomi Mobile Software Co., Ltd., Beijing 100085 (CN)
(72) Inventor: Potetsianakis, Emmanouil, 2563 TZ The Hague (NL); Thomas, Emmanuel, 2611 WD Delft (NL)
(74) Representative: RVDB Rennes

(57) **Abstract**

The present application relates to a method of obtaining, by a capture apparatus, at least one segmented object extracted from a video . The method comprises the following steps executed by the capture apparatus: obtaining (210) said at least one segmented object from the video or at least a part of the video by applying an object segmentation process on the video; generating (220) first metadata representative of a semantical annotation map comprising said at least one mask, each mask being representative of at least one segmented object; writing (230) the first metadata into a container; transmitting (240) the container to the target device over a communication network.

## Description

### FIELD

The present application generally relates to a capture apparatus configured to obtaining objects extracted from a video.

### BACKGROUND

The present section is intended to introduce the reader to various aspects of art, which may be related to various aspects of at least one exemplary embodiment of the present application that is described and/or claimed below. This discussion is believed to be helpful in providing the reader with background information to facilitate a better understanding of the various aspects of the present application. Accordingly, it should be understood that these statements are to be read in this light, and not as admissions of prior art.

Semantical analysis is a process during which objects and their properties within a video (scene) are identified. Object segmentation, which is a part of semantical analysis of a video is the separation of the individual object boundaries and their own properties.

Due to the high computational complexity of the Semantical analysis process, it often needs to be performed on specialized devices. Additionally, because the Semantical analysis process requires a large amount of model and parameter data, the bandwidth cost for transmitting the parameters and models used in the computation of Semantical analysis is high.

### SUMMARY

The following section presents a simplified summary of the at least one exemplary embodiment in order to provide a basic understanding of some aspects of the present application. This summary is not an extensive overview of an exemplary embodiment. It is not intended to identify key or critical elements of an exemplary embodiment. The following summary merely presents some aspects of the at least one exemplary embodiment in a simplified form as a prelude to the more detailed description provided elsewhere in the document.

According to a first aspect of the present application, there is provided a method of obtaining, by a capture apparatus, at least one segmented object extracted from a video, wherein the method comprises the following steps:
- obtaining said at least one segmented object from the video or at least a part of the video by applying an object segmentation process on the video;
- generating first metadata representative of a semantical annotation map comprising said at least one mask, each mask being representative of at least one segmented object;
- writing the first metadata in a container;
- transmitting the container to a target device over a communication network.

The present invention limits the required bandwidth between the capture apparatus and the target device compared to the prior art because the capture apparatus extracts segmented objects and transmits to the target device only metadata representative of a semantical annotation map comprising mask representative of said segmented objects. The video is not required to be transmitted to the target device.

The present invention further reduce the energy consumption of the capture device because the video does not have to be encoded and transmitted to the target device.

In one exemplary embodiment, the capture apparatus further generates and writes second metadata into the container, said second metadata being required to obtain and/or to process and/or to interpret the semantical annotation map.

In one exemplary embodiment, the method further comprises writing, by the capture apparatus, into the container, video picture data corresponding to the semantical annotation map.

In one exemplary embodiment, the masks of the semantical annotation map are pixel-masks formatted according to an image or video format.

In one exemplary embodiment, the masks of the semantical annotation map are formatted according to a structured text format.

In one exemplary embodiment, the masks of the semantical annotation map are binary pixel-masks, each pixel mask indicates whether an object is present at that pixel that mask is covering.

In one exemplary embodiment, a binary pixel-mask is representative of multiple segmented objects.

In one exemplary embodiment, the masks of the semantical annotation map are polygon masks, or key-point masks formatted according to a vector graphics format.

In one exemplary embodiment, the masks of the semantical annotation map are written in the container formatted according to a structured text format.

In one exemplary embodiment, the container contains both a main video track and an auxiliary video track associated with a video-coded mask, said video-coded mask being obtained by coding a mask as a video.

In one exemplary embodiment, the container further comprises a track reference box to indicate the auxiliary video track associated with each video-coded mask complements the main video track.

In one exemplary embodiment, the container contains both a main video track and an auxiliary track associated with each mask coded according to an image compression scheme.

In one exemplary embodiment, the container contains a main video track and an auxiliary track associated with masks coded according to a specific compression scheme defined for masks.

In one exemplary embodiment, the container contains a primary track that encapsulates a semantical annotation map.

According to a second aspect of the present application, there is provided a method of obtaining by a target device, at least one segmented object extracted from a video, wherein the method comprises the following steps executed by the target device:
- receiving a container from a communication network, said container being obtained by a method according to the first aspect of the present application;
- obtaining a semantical annotation map by parsing first metadata in the received container; and
- obtaining said at least one segmented object from the semantical annotation map.

According to a third aspect of the present application, there is provided a non-transitory storage medium (or storing medium) carrying instructions of program code for executing any one of the methods according to the first aspect of the present application.

According to a fourth aspect of the present application, there is provided a capture apparatus, comprising:
- a process unit, configured to perform obtaining said at least one segmented object from a video or at least a part of a video by applying an object segmentation process on the video, generating first metadata representative of a semantical annotation map comprising said at least one mask, each mask being representative of at least one segmented object, and writing the first metadata in a container; and
- a transmission unit, configured to perform transmitting the container to a target device over a communication network.

According to a fifth aspect of the present application, there is provided a target device, comprising:
- a receiving unit, configured to perform receiving a container from a communication network, said container being obtained by a method according to the first aspect of the present application ; and
- a process unit configured to perform obtaining a semantical annotation map by parsing first metadata in the received container; and obtaining said at least one segmented object from the semantical annotation map.

According to a sixth aspect of the present application, there is provided a container formatted to comprise first metadata obtained by a method according to the first aspect of the present application, said first metadata being representative of a semantical annotation map comprising at least one mask, each mask being representative of at least one segmented object of a video picture, wherein the container is a ISOBMFF formatted file that conforms to the standard ISO/IEC 14496-12 or one of its derivatives.

In one exemplary embodiment, the container is fragmented into multiple network elements intended to be transmitted over a communication network.

The specific nature of at least one of the exemplary embodiments as well as other objects, advantages, features and uses of said at least one of exemplary embodiments will become even more apparent from the following description of examples taken in conjunction with the accompanying drawings.

### BRIEF DESCRIPTION OF THE DRAWINGS

Reference will now be made, by way of example, to the accompanying drawings which show exemplary embodiments of the present application, and in which:
**Figure 1** shows an example of binary masks used to annotate segmented objects in accordance with prior art;
**Figure 2** shows a system 1 in accordance with an exemplary embodiment of the present invention;
Figure 3a shows a schematic diagram of steps of a method 200 of obtaining, by a capture apparatus, at least one segmented object extracted from a video in accordance with exemplary embodiments of the present invention;
**Figure 3b** shows a schematic diagram of steps of a method 300 of obtaining, by the capture device 11, at least one segmented object extracted from a video in accordance with exemplary embodiments of the present invention;
**Figure 4** shows an example of encapsulation of a main video associated with an auxiliary video track into a ISOBMFF file in accordance with the first variant of said exemplary embodiment of the present invention;
**Figure 5** shows an example of encapsulation of a main video associated with an auxiliary video track into a ISOBMFF file in accordance with the second variant of said exemplary embodiment of the present invention;
**Figure 6** shows an example of encapsulation of a main video associated with a mask into a ISOBMFF file in accordance with the third variant of said exemplary embodiment of the present invention;
**Figure 7** shows an example of encapsulation of segmentation mask track associated with a semantical annotation map into a ISOBMFF file in accordance with said exemplary embodiment of the fourth variant;
**Figure 8** shows an example of encapsulation of segmentation mask track associated with a semantical annotation map into a ISOBMFF file in accordance with said exemplary embodiment of the fourth variant;
**Figure 9** shows a schematic block diagram illustrating an example of a system 1 in which various aspects and exemplary embodiments are implemented.

Similar or same elements are referenced with the same reference numbers.

### DESCRIPTION OF EXEMPLARY EMBODIMENTS

At least one of the exemplary embodiments is described more fully hereinafter with reference to the accompanying figures, in which examples of at least one of the exemplary embodiments are depicted. An exemplary embodiment may, however, be embodied in many alternate forms and should not be construed as limited to the examples set forth herein. Accordingly, it should be understood that there is no intent to limit exemplary embodiments to the particular forms disclosed. On the contrary, the present application is intended to cover all modifications, equivalents, and alternatives falling within the spirit and scope of the present application.

In a first approach, object segmentation identifies specific or all objects visible in one or more video frames of a video and annotates in a separate file the areas corresponding to segmented objects in the video pictures to indicate existence of said segmented objects.

Areas may be annotated by using pixel-masks, polygon-masks, segment-masks, Key-point-masks, etc.

Pixel-mask, and called pixel-wise mask, may be used to annotate segmented object.

Pixel-mask represents the presence of each pixel or a set of pixels of a video picture in a segmented object. In other words, a pixel-mask indicates whether an object is present at that pixel that mask is covering.

Polygon-mask, also called edge-mask may also be used to annotate segmented object. Polygon-masks are represented by closed shapes, e.g. polygon curves, surrounding the segmented objects.

Segment-mask may also be used to annotate segmented object. Segment-mask is similar to a pixel-mask but instead of on element of a table corresponds to a pixel, it corresponds to one segment that includes multiple aligned pixels.

Key-point-mask may also be used to annotate segmented objects. Key-point-mask represents coordinates/pixels of key parts of a segment object, e.g. a key-point-mask relative to a "human face" may represent coordinates/pixels of (or of the centre of) eyes, mouth, nose, ears etc.

In a second approach, object segmentation creates a classification model based on a trained neural network and determines parameters of the classification model in order to perform the object extraction from a video picture.

Usually, a capture apparatus captures a video and transmits the captured video to a target device (remote device) which applies an object segmentation on the received captured video to extract segmented objects and to annotate the segmented objects by using masks.

The target device may have to consume lot of energy to handle multiple requests from multiple sources. This may be a problem when the target device is an end-user device with limited battery.

Transmitting the captured video requires lot of bandwidth between the capture apparatus and the target device. This is another technical issue to be solved.

For example, when a classification model based on a trained neural network is used to annotate segmented object, the target device shall have sufficient resource to perform complex functions. Moreover, lot of bandwidth is required to transmit neural network setup/update information and the captured video as input of the classification model.

The technical problems to be solved are to reduce to energy consumption and bandwidth to get objects extracted from a video.

At least one exemplary embodiment of the present application has been devised with the foregoing in mind.

Typically, pixel-masks are binary masks that may be represented by a table of elements expressed in a structured text-based format such as JSON (JavaScript Object Notation). Each element is representative of a square area in the captured video picture, i.e. each area comprises at least one pixel. An element of the table is set to "1" when a part of the object belongs to a square area corresponding to said element set and is set to "0" otherwise.

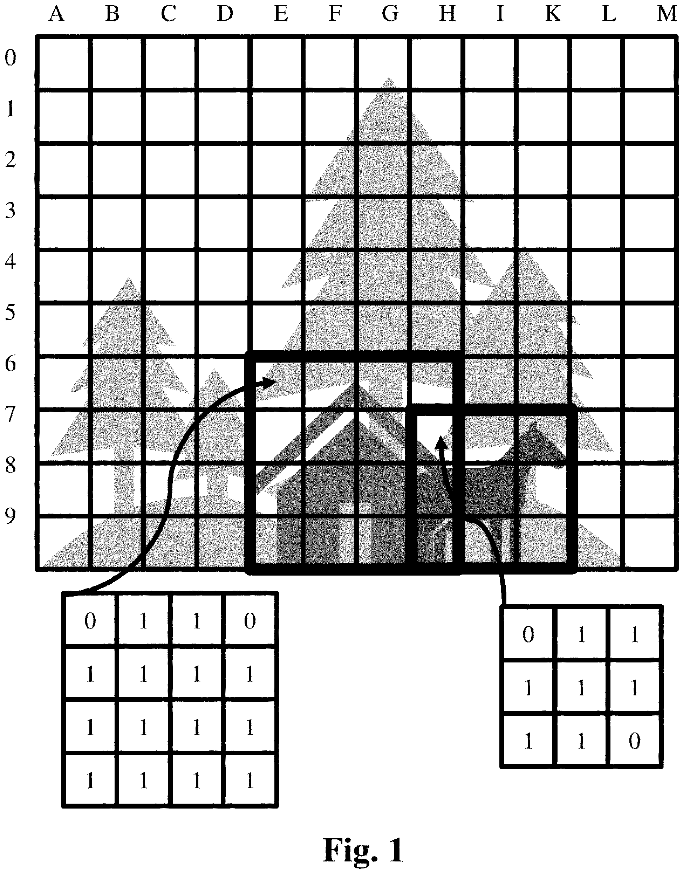

**Figure 1** shows an example of binary masks used to annotate segmented objects in accordance with prior art.

In this example, two objects are segmented in a video picture: a horse and a house. Binary masks are used to annotate this two objects. Each of this binary mask is represented here as an array. Arrows indicate anchor points of the masks in the video frame.

Pixel-masks may also be represented by a picture of the same size of the video picture from which the segments objects are extracted. Colour values are assigned to pixel of said picture according to the presence of these pixels to a segmented object. The colour values of such mask may by expressed by using a single colour channel or a combination of multiple colour (typically 3) channels.

At least one of the aspects generally relates to transmitting a container comprising first metadata representative of a semantical annotation map comprising at least one mask, each mask being representative of one segmented object.

One other aspect generally relates to producing/writing and possibly storing in a file or transmitting into a stream those first metadata and reading/accessing from a file or decoding from a bitstream those first metadata.

Encapsulation is a process of wrapping media representation within a container. Binary structures such as binary files are one instantiation of a container. Binary files define the syntax for parsing and understanding the structures of files. They have a start and an end and typically holds self-contained information. Binary files are generally transported and stored as a whole. However, binary files may be further segmented into smaller file units for the purpose of transmission over a network such as using HTTP-based transport. Popular standards for HTTP-based streaming are Apple HTTP Live Streaming (IETF Internet draft) and MPEG-DASH (Dynamic Adaptive Streaming over HTTP, ISO/IEC 23009-1).

When transmitting media data, a real-time protocol may also be chosen in order to meet the requirement of a targeted application. The container is fragmented into multiple network elements, typically transport packets, intended to be transmitted over a communication network.. In this case, the first metadata are typically encapsulated into transport packets and the container is then a stream and not as a file structure. For example, Real-time Transport Protocol (RTP) (RFC 3550) can be used. But other transport packet encapsulation may be used without any limit of the scope of the present invention. A container may then be a stream (network packets) or a binary file. In the following, exemplary embodiments of the present invention are described by considering encapsulation of first metadata into a file based on an instantiation of a binary file, called ISOBMFF file as defined in the standard ISO/IEC 14496-12 ("Information technology - Coding of audio-visual objects - Part 12: ISO base media file format") or one of its derivatives. But other file instantiation may be used without any limit of the scope of the present invention.

Moreover, exemplary embodiments of a transport packet encapsulation could also be deduced from the following described exemplary embodiments of a file encapsulation by considering a transport standard as instantiation of a transport packet encapsulation rather than the described file encapsulation.

The at least one exemplary embodiment may apply to pre-existing or future-developed, and extensions of standards and recommendations. Unless indicated otherwise, or technically precluded, the aspects described in the present application may be used individually or in combination.

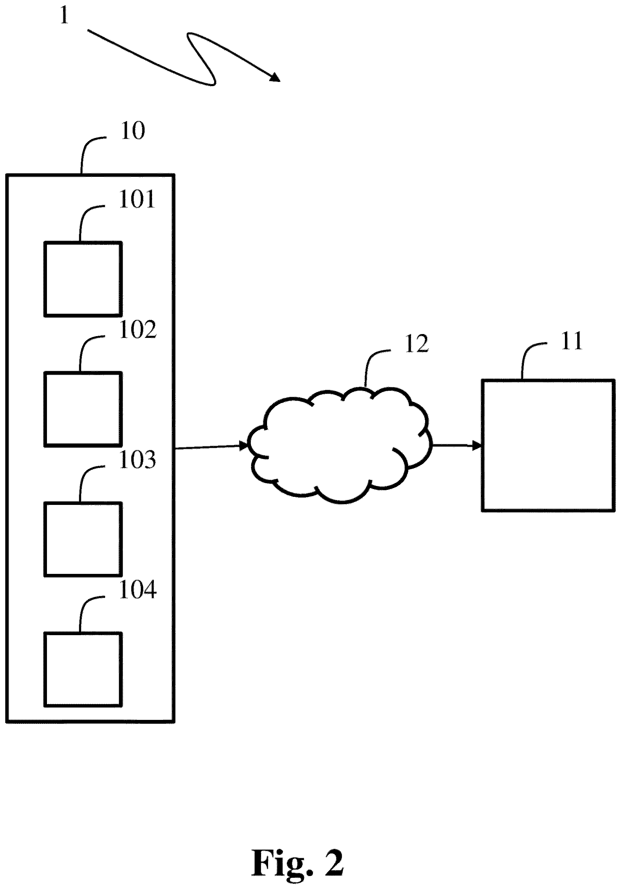

**Figure 2** shows a system 1 in accordance with an exemplary embodiment of the present invention.

The system 1 comprises a capture apparatus 10 and a target device 11 communicating over a communication network 12.

The capture apparatus 10 may comprise a sensor 101 for capturing video expressed in a video format. For example, sensor 101 may be a camera to capture video in a RGB format or a sensor to capture video representative of a distance (depth) between an object and the sensor or an infra-red video.

The capture apparatus 10 may also comprises means 102 for coding a captured video according to a video compression system such as HEVC (ISO/IEC 23008-2 High Efficiency Video Coding, ITU-T Recommendation H.265, https://www.itu.int/rec/T-REC-H.265-202108-P/en) or VVC (ISO/IEC 23090-3 Versatile Video Coding, ITU-T Recommendation H.266, https://www.itu.int/rec/T-REC-H.266-202008-I/en, low-level and high-level picture partitioning are provided to divide a video picture into picture areas so-called Coding-Tree Units (CTU) which size may be typically between 16x16 and 64x64 pixels for HEVC and 32x32, 64x64, or 128x128 pixels for VVC.

The capture apparatus 10 further comprises means 103 for performing a semantical analysis of a video.

The capture apparatus 10 further comprises means 104 for transmitting a container to the target device 11 over the communication network 12.

Communications between the capture apparatus 10 and the target device 11 may be communications between applications implemented on these devices.

The sensor 101 may be a sensor head comprising multiple sensors.

The means of the capture apparatus 10 may be split between multiple remote devices. For example, sensor 101 may be implemented in a first device and the video is then transmitted to means 102 implemented by a second device. Said second device further comprises the means 103 and 104 to transmit the container to the target device 11.

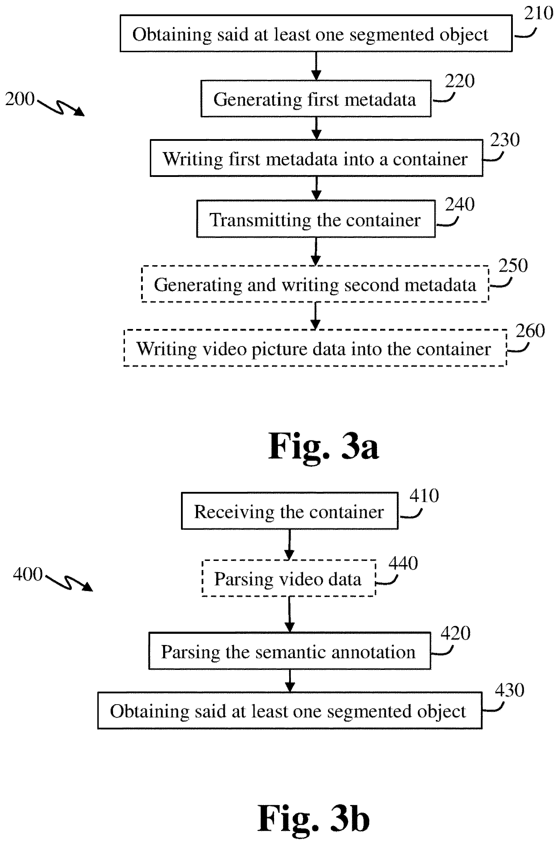

Figure 3a shows a schematic diagram of steps of a method 200 of obtaining, by capture apparatus 10, at least one segmented object extracted from a video in accordance with exemplary embodiments of the present invention;
For example, the video can be captured by the sensor 101.

In step 210, the capture apparatus 10 obtains said at least one segmented object from the video or at least one part of the video by applying an object segmentation process on the video.

In one variant of method 200, step 210 follows a request transmitted by the target device 11 and received by the capture apparatus 10.

Each segmented object may correspond to an object extracted from at least one video picture of the video. When a segmented object corresponds to a single video picture of the video, then the segmented object is spatially defined. When the segmented object corresponds to multiple consecutive video pictures, the object is spatially and temporally defined.

A way to represent the temporal property of an object could be to use a multidimensional array, such as a three-dimensional array, where the time information in the third dimension indicates the time that the pixel belongs to the object.

In one exemplary embodiment of step 210, the object segmentation is based on a classification model.

The classification model can be constructed using various methods, such as through the use of neural networks trained on a training set of training videos.

In step 220, the capture apparatus 10 generates first metadata representative of semantical annotation map comprising at least one mask, each mask being representative of at least one segmented object.

For example, referring back to the binary mask examples of **Figure 1****,** first metadata may comprise two multi-dimensional arrays, each of said multi-dimensional array representing the house mask and the other one representing the horse mask.

Alternatively, the first metadata may comprise a single multi-dimensional array representing both the house and horse masks.

In step 230, the capture apparatus 10 writes the first metadata in a container.

In step 240, the capture apparatus 10 transmits the container to the target device 11 over a communication network 12.

In one variant of method 200, in step 250, the capture apparatus 10 further generates and writes second metadata in the container, said second metadata being required to obtain and/or to process and/or interpret the semantical annotation map.

There are different second metadata that might be required for an extraction and/or processing and/or interpretation of the semantical annotation map.

Said second metadata depend on the usage of the semantical annotation map. The reader may find different definition of second metadata in the prior art (G. Brostow et.al. "Semantic object classes in video: A high-definition ground truth database". 2008. http://www0.cs.ucl.ac.uk/staff/G.Brostow/papers/Brostow_2009-PRL.pdf COCO Dataset: All you need to know to get started https://www.v7labs.com/blog/coco-dataset-guide).

Some second metadata may be parts of a dictionary that may be transmitted once to the target device 11 and parsed by said target device 11 at an initialization step.

Some second metadata relate to all the masks of the semantical annotation map.

For example, such second metadata may be a label ID identifying a particular segmented object, a label name/type indicating a name and/or type of one segmented object relative to a mask of the semantical annotation map, a high-level label indicating a name/type of one segmented object relative to a mask of the semantical annotation map at a high level of semantical interpretation of the semantical annotation map, properties of one segmented object relative to a mask of the semantical annotation map, e.g. reflective/refractive, a panoptic label indicating a specific type of categorization that may be used to separate segmented objects between "things" and "stuff" as defined for example on COCO Database.

Some second metadata relate to each mask of the semantical annotation map.

For example such second metadata may be a Mask identifier used to identify a mask if multiple masks are present in the semantical annotation map, a list of label ID identifying segments object represented by a mask of the semantical annotation map, a type of a mask.

The second metadata may also be relative to an event item corresponding to an event occurs at a corresponding video picture or multiple video pictures. The event might be associated with a Category ID (differentiating the different events), Duration, Mask/Objects IDs (that are part of the event) etc. This kind of second metadata can be in a timed metadata track within the same container as the masks.

The second metadata may also be a source item that contains a URL indicating the sources from which a mask is extracted from.

The second metadata may also be a hierarchy item describing a hierarchy of multiple-level hierarchy of segmented objects (as defined for example in https://github.com/nightrome/cocostuff#label-hierarchy ).

The second metadata may also be a bounding box/sphere item relative to a bounding box indicating an area in which one (or more) segmented objects are contained. This is useful if partial annotation is desired and/or if there are interactivity features. The bounding box can also be in 2D or 3D.

In one variant of method 200, in step 260, the capture apparatus 10 further writes in the container, video picture data corresponding to masks.

**Figure 3b** shows a schematic diagram of steps of a method 400 of obtaining, by the capture device 11, at least one segmented object extracted from a video in accordance with exemplary embodiments of the present invention;
In step 410, the target device 11 receives the transmitted container.

In step 420, the target device 11 obtains the semantical annotation map by parsing first metadata in the received container.

In step 430, the target device 11 obtains said at least one segmented object based on the semantical annotation map.

In one variant of method 400, in step 440, the capture apparatus 10 further obtains video data by parsing the container.

In one variant of step 410, the target device 11 further parses second metadata from the received container, and in step 420, the target device 11 uses said second metadata to obtain and/or process and/or to interpret the semantical annotation map.

The semantical annotation maps may be represented by using different mask types such as pixel-masks, segment-masks, key-point masks, polygon masks, etc. as discussed above. Each of this mask type may be represented according to a particular format that may be compatible with standardized coding.

In one exemplary embodiment, the masks of the semantical annotation map are pixel-masks formatted according to a video format.

This exemplary embodiment is advantageous because the mask may then be coded by using standard video compression system such as HEVC or VVC for example. This exemplary embodiment can be used for representing semantical annotation map when second metadata is also written in the container. The pixel-mask may support multiple shades/colours for multiple segmented objects. Lossy coding can be used for limiting bandwidth or alternatively lossless coding or uncompressed video can be used for precision. Pixel-masks can be easily spatially and temporally synchronized with the video picture data. Different video frame rates for the masks can be used if the segmentation sampling rate does not match the video framerate. Time offsets can be signalled to compensate for any delays of the segmentation process.

In one exemplary embodiment, the masks of the semantical annotation map are pixel-masks formatted according to an image format.

This exemplary embodiment is advantageous because the mask may then be coded by using standard image format such as PNG, JPG, BMP,.. for example. This exemplary embodiment can be used for representing semantical annotation map when second metadata is also written in the container. The pixel-mask may support multiple shades/colours for multiple objects. Temporal synchronization can be achieved in a container level, e.g. by using timed metadata tracks as defined in ISO/IEC 14496-12. Spatial synchronization can be achieved by giving coordinates in the second metadata (in case the dimensions of the images do not match the video pictures).

In a variant of this exemplary embodiment, the pixel-mask is expressed as an image (per video picture, or per video picture sampling rate). For multiple objects, each colour of a pixel represents the existence of an object. Usually the black colour indicates that no object is present on a pixel. A "dictionary" indicating the correspondence of the colours to objects is provided as second metadata (once, at initialization, that might be updated if new objects are detected).

In a variant of this exemplary embodiment, each image representative of pixel-masks is considered as a video picture of a video and the video is encoded using a lossless or lossy video codec.

In one exemplary embodiment, the masks, e.g. pixel-masks, segment masks, key-point map, or polygon mask, of the semantical annotation map are formatted according to a structured text format.

This exemplary embodiment is advantageous because the mask may then be coded by using text-based format such as CVS,JSON,XML,.. for example. Temporal synchronization can be achieved in a container level, e.g. by using timed metadata tracks as defined in ISO/IEC 14496-12.

If the mask, formatted according to a text-based format, does not have the same number of elements as the video has pixels, information is written in the container as second metadata to spatially align the masks within a video picture (e.g. X and Y coordinates). Note, this is applicable if the mask is based on an object matrix, if the mask represents object polygon(s)/shape(s) then only the spatial characteristics with regards to the video picture are needed.

In one exemplary embodiment, the masks of the semantical annotation map are binary pixel-masks, each binary pixel mask indicates whether an object is present at that pixel that mask is covering .

This exemplary embodiment is advantageous because temporal synchronization can be achieved in a container level, e.g. by using timed metadata tracks as defined in ISO/IEC 14496-12. Spatial synchronization can be achieved by giving coordinates in the second metadata (in case the dimensions of the images do not match the frames). The binary format should be described as metadata if it is not in a standard format.

In a first variant of this exemplary embodiment, a binary pixel-mask is representative of one single segmented object and is formatted according to a particular binary format (first metadata). The particular binary format might use 1 bit per pixel to express the existence of one segmented object on that pixel (i.e. if the first bit value equals to 0 then the segmented object is not on the first pixel, if it is 1 then the first pixel contains the segmented object, the second bit for the second pixel etc.). If the binary pixel-mask does not have the same dimensions as that a video picture, then the information to assign the covered area by the binary pixel-mask with regards to the video picture is provided as second metadata. For example, this can be done by providing the starting point of the binary pixel-mask within the video picture and the number of pixels for each row (also known as stride) of the semantical annotation map.

In a second variant of this exemplary embodiment, a binary pixel-mask is representative of multiple segmented objects and is formatted according to the particular binary format as discussed above except that said particular binary format might use 1 bit per segmented object, per pixel (first metadata). In that case, information on what segmented objects are contained in the binary pixel-mask and which bit corresponds to which segmented object is written in the container as second metadata. For example, assuming segmented objects A, B and C, for bit alignment in the same order, three bits are required, a first value of 000 will indicate that none of the segmented objects is present on the first pixel, a second value of 111 will indicate that all three segmented objects are present on the second pixel, a third value of 010 will indicate that only the B segmented object is present on the third pixel etc.

In one exemplary embodiment, the masks of the semantical annotation map are polygon masks, or key-point masks formatted according to a vector graphics format.

This exemplary embodiment is advantageous because the mask may then be coded by using text format such as SVG, PDF,.. for example.

This exemplary embodiment is advantageous because temporal synchronization can be achieved in a container level, e.g. by using timed metadata tracks as defined in ISO/IEC 14496-12.

In one exemplary embodiment, the segmented masks extracted from a video are packaged in a same container.

In one exemplary embodiment, the container is a binary file and the masks of the semantical annotation map are written in a container formatted according to a structured text format

In one exemplary embodiment, the binary file is a so-called ISO Base Media File Format (ISOBMFF) file as defined in the standard ISO/IEC 14496-12.

Basically, the standard ISO/IEC 14496-12 allows to store multiple sequences of consecutives samples (audio sequences, video sequences, subtitles, etc.) into the so-called tracks that are differentiated by their handler types.

A primary video track may use a 'video' handler type in a handler box 'hdlt' of a media box containing visual content data of a main video and an auxiliary video track may use a 'auxv' handler type in the handler box 'hdlt' of another media box containing visual content data of an auxiliary video data.

The auxiliary video track is coded the same as the primary video track, but uses a different handler type, and is not intended to be visually displayed as the primary video track would typically be.

The standard ISO/IEC 14496-12 provides the ability to link tracks to express a certain relationship thanks to a track referencing mechanism. This is a track-to-track signaling that may be realized by a particular box called track reference box as defined in clause 8.3.3 of the standard ISO/IEC 14496-12.

In one first variant of this exemplary embodiment, the ISOBMFF file contains both a main video track and an auxiliary video track associated with each video-coded mask, i.e. the mask is coded as a video and said video is encapsulated in an auxiliary video track.

The ISOBMFF file may then comprises a main video track and at least one auxiliary video track.

The ISOBMFF file further contains a handler box 'hdlt' with handler type equals to 'video' to indicate that the main video track corresponds to a video and a handler box 'hdlt' with handler type equals to 'auxv' to indicate that the auxiliary video track corresponds to a video.

Said video-coded mask can utilize existing mechanisms for storing video such as defined in the specification ISO/IEC 14496-15 ("Information technology - Coding of audio-visual objects - Part 15: Carriage of network abstraction layer (NAL) unit structured video in the ISO base media file format" https://www.iso.org/standard/83336.html/.)

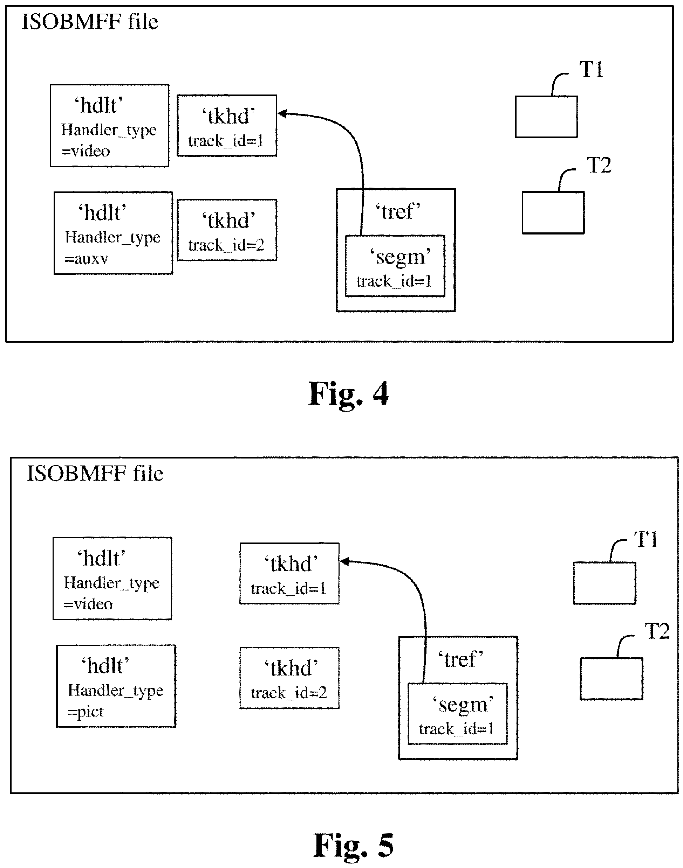

**Figure 4** shows an example of encapsulation of a main video associated with an auxiliary video track into a ISOBMFF file in accordance with the first variant of said exemplary embodiment of the present invention.

Note that for the sake of simplicity, only the relevant boxes are represented on **Figure 4****.**

The ISOBMFF file of **Figure 4** contains a media data box that stores data representing the visual content of a primary video track T1 corresponding to data representing the visual content of the main video and a media data box stores data representing the visual content of the auxiliary video track corresponding to data representing the visual content of a video-coded mask.

The primary video track T1 is identified by an identifier track_ID=1 and the auxiliary video track T2 is identified by an identifier track_ID=2. These identifiers are signaled in a track header box 'tkhd'.

The ISOBMFF file contains a handler box 'hdlt' that indicates the handler type 'video' of the main video track T1 and a handler box 'hdlt' per auxiliary mask track T2 to indicate the handler type 'auxv' of an auxiliary video track T2.

In accordance with the first variant, the ISOBMFF comprises a track reference box 'segm' to indicate that the auxiliary video track T2 relative to masks (e.g. video-coded masks) complements the primary video track. The track reference box 'segm' contains the identifier of the referenced track (here track_id=1) which links the auxiliary video track T2 with the primary video track T1.

Multiple auxiliary video track T2 can be thus associated with a same primary video track using the referencing mechanism based on multiple track reference boxes of type 'segm', one track reference track per auxiliary video track T2.

In one second variant of this exemplary embodiment, the ISOBMFF file contains both a main video track and an auxiliary track associated with each mask coded according to an image compression scheme.

The ISOBMFF file may then comprises a main video track and at least one auxiliary track.

The ISOBMFF file further contains a handler box 'hdlt' with handler type equals to 'video' to indicate that the main video track corresponds to a video and a handler box 'hdlt' with handler type equals to 'pict' to indicate that the auxiliary track corresponds to an image or a sequences of images.

The handler type of a mask track also refers to the used compression scheme.

**Figure 5** shows an example of encapsulation of a main video associated with an auxiliary video track into a ISOBMFF file in accordance with the second variant of said exemplary embodiment of the present invention.

Note that for the sake of simplicity, only the relevant boxes are represented on **Figure 5****.**

The ISOBMFF file of **Figure 5** contains a media data box that stores data representing the visual content of a primary video track T1 corresponding to data representing the visual content of the main video and a media data box stores data representing the visual content of the auxiliary track corresponding to data representing the visual content of an image-coded mask.

The primary video track T1 is identified by an identifier track_ID=1 and the auxiliary video track T2 is identified by an identifier track_ID=2. These identifiers are signaled in a track header box 'tkhd'.

The ISOBMFF file contains a handler box 'hdlt' that indicates the handler type 'video' of the main video track T1 and a handler box 'hdlt' per auxiliary mask track T2 to indicate the handler type `pict of an auxiliary track T2.

In accordance with the second variant, the ISOBMFF file comprises a track reference box 'segm' to indicate that the auxiliary track T2 relative to masks complements the primary video track. The track reference box 'segm' contains the identifier of the referenced track (here track_id=1) which links the auxiliary track T2 with the primary video track T1.

Multiple auxiliary tracks T2 can be thus associated with a same primary video track using the referencing mechanism based on multiple track reference boxes of type 'segm', one track reference track per auxiliary track T2.

In one third variant of this exemplary embodiment, the ISOBMFF contains a main video track and an auxiliary track associated with masks coded according to a specific compression scheme defined for masks.

The ISOBMFF file may then comprises a main video track and at least one auxiliary track.

The ISOBMFF file further contains a handler box 'hdlt' with handler type equals to 'video' to indicate that the main video track corresponds to a video and a handler box 'hdlt' with handler type equals to 'meta' to indicate that the visual content of the auxiliary track is encoded according to a specific compression scheme defined for masks.

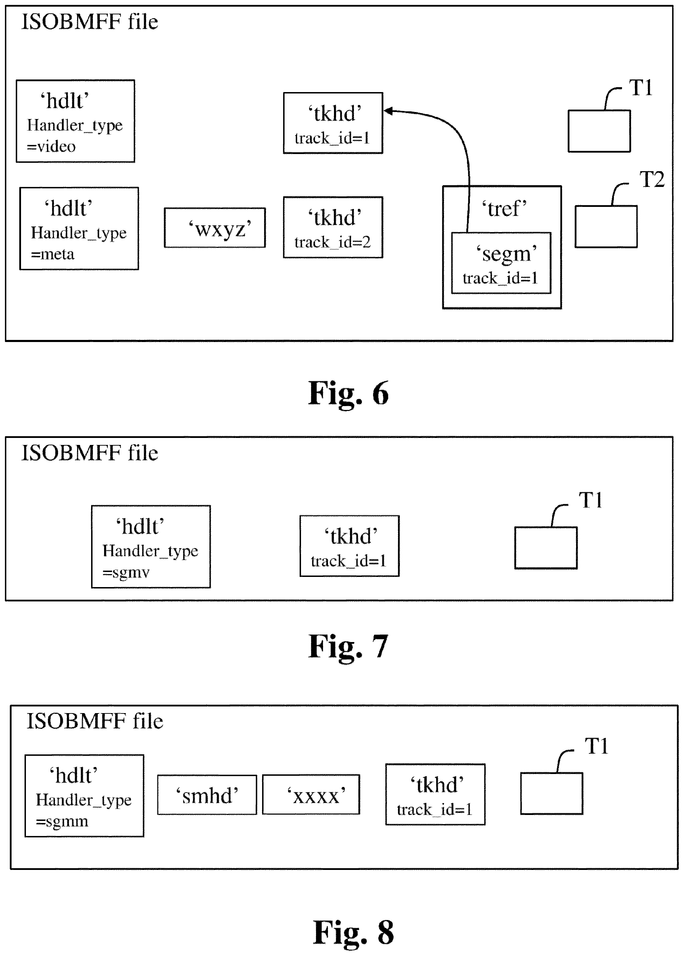

**Figure 6** shows an example of encapsulation of a main video associated with a mask into a ISOBMFF file in accordance with the third variant of said exemplary embodiment of the present invention.

Note that for the sake of simplicity, only the relevant boxes are represented on **Figure 6****.**

The ISOBMFF file of **Figure 6** contains a media data box that stores data representing the visual content of a primary video track T1 corresponding to data representing the visual content of the main video and a media data box stores data representing the visual content of the auxiliary track T2 corresponding to data representing the visual content of a coded mask.

The primary video track T1 is identified by an identifier track_ID=1 and the auxiliary video track T2 is identified by an identifier track_ID=2. These identifiers are signaled in a track header box 'tkhd'.

The ISOBMFF file contains a handler box 'hdlt' that indicates the handler type 'video' of the main video track T1 and a handler box 'hdlt' per auxiliary mask track T2 to indicate the handler type 'meta' of an auxiliary track T2.

In accordance with the third variant, the ISOBMFF file comprises a track reference box 'segm' to indicate that the auxiliary track T2 relative to masks complements the primary video track. The track reference box 'segm' contains the identifier of the referenced track (here track_id=1) which links the auxiliary track T2 with the primary video track T1.

Alternatively, the ISOBMFF file may contain an additional media box "wxyz' associated with the auxiliary track T2 that defines the compression scheme used to code a mask and contains a generic media box 'cdsc' instead of a track reference box 'segm'. The generic media box 'cdsc' may be used for encapsulating any content but the additional media box "wxyz' indicates that said generic media box refers to a mask.

In the three variant, auxiliary tracks of a main video track are used to encapsulate the masks. As a result, the nature of these auxiliary tracks are expressed via track reference boxes. However, if an auxiliary track is the only track in an ISOBMFF file and thus the main track of said file, there is a need of another signalling mechanism since there is no longer track reference boxes.

In one fourth variant of this exemplary embodiment, the ISOBMFF file contains a primary track T1 called segmentation mask track that encapsulates a semantical annotation map.

In one variant, the ISOBMFF file further comprises at least one track reference box 'segm' to indicate that at least one auxiliary track complements the primary track.

In one exemplary embodiment of the fourth variant, the segmentation mask track is a primary video track having a handle type `sgmv'. The semantical annotation map is then coded as a video.

**Figure 7** shows an example of encapsulation of segmentation mask track associated with a semantical annotation map into a ISOBMFF file in accordance with said exemplary embodiment of the fourth variant.

Note that for the sake of simplicity, only the relevant boxes are represented on **Figure 7****.**

The ISOBMFF file of **Figure 7** contains a media data box that stores data representing the visual content of a primary video track T1 corresponding to data representing the visual content of a coded semantical annotation map.

The primary video track T1 is identified by an identifier track_ID=1 signaled in a track header box 'tkhd'.

The ISOBMFF file contains a handler box 'hdlt' that indicates the handler type 'sgmv' of the main video track T1. The semantical annotation map is then coded as a video.

In one exemplary embodiment of the fourth variant, illustrated in **Figure 8****,** the segmentation mask track is a primary track having a handle type 'sgmm'. The ISOBMFF file may further contain an additional media box 'xxxx' that defines a compression scheme used to code the semantical annotation map and contains a segmentation mask header box 'smhd'. The segmentation mask header box 'smhd' contains general information describing the segmentation, including mapping between coded values of objects in the primary video track T1 and their references to defined objects.

In addition to the handler and track reference boxes, ISOBMFF allows to store metadata defined in ISO/IEC 23002-2 as metadata item in a track. The compressed or uncompressed first metadata and, optionally the second metadata, representative of masks may then be encapsulated in a ISOBMFF file, i.e. the first metadata may be formatted as sample within a track.

For example, first and second metadata can be placed in a media box called MetaBox of 'meta' having a handler type 'segmi'. These boxes contain untimed metadata and can be one at file level (e.g. first metadata) or track level (e.g. second metadata).

Note that the presence of the box "segmi' also serves the purpose of conveying information that a parent track is a segmentation mask track. By doing so, this could be a generic way of expressing the nature of the track if none of the above fourth variants are used. The only downside is that the metadata box is a bit hidden in the file structure and usually not exposed to higher level of transmission systems. For that reason, its presence might be signalled through different means (i.e. out-of-band).

In one exemplary embodiment, the container is fragmented into multiple network elements intended to be transmitted over a communication network.

The container is then a stream transmitted after establishing a transmission session between the capture apparatus and the target device.

In one variant, the network elements are RTP packets and the container is transmitted using a RTP-based protocol (RTP: A Transport Protocol for Real-Time Applications https://www.rfc-editor.org/rfc/rfc3550).

Video-coded semantic annotation map can be also transmitted with protocols like RTP (RTP: A Transport Protocol for Real-Time Applications https://www.rfc-editor.org/rfc/rfc3550). The specifics of the encapsulation depends on the video codec chosen (e.g. RFC 3984 for AVC, RFC 3984. RTP Payload Format for H.264 Video. https://www.ietf.org/rfc/rfc3984.txt). Before initiating an RTP session, there is a capabilities exchange step and the Session Description Protocol (SDP) [14].

Here, we describe how SDP can accommodate the mask use case.

According to RFC 4566, An SDP session description consists of a number of lines of text of the form: <type>=<value>
where <type> MUST be exactly one case-significant character and <value> is structured text whose format depends on <type>.

In general, <value> is either a number of fields delimited by a single space character or a free format string and is case-significant unless a specific field defines otherwise. Whitespace MUST NOT be used on either side of the "=" sign.

An SDP session description consists of a session-level section followed by zero or more media-level sections. The session-level part starts with a "v=" line and continues to the first media-level section. Each media-level section starts with an "m=" line and continues to the next media-level section or end of the whole session description. In general, session-level values are the default for all media unless overridden by an equivalent media-level value. Some lines in each description are REQUIRED and some are OPTIONAL, but all MUST appear in exactly the order given here (the fixed order greatly enhances error detection and allows for a simple parser). OPTIONAL items are marked with a "*".

A Session description comprises the following information:
v= (protocol version)
o= (originator and session identifier)
s= (session name)
i=* (session information)
u=* (URI of description)
e=* (email address)
p=* (phone number)
c=* (connection information -- not required if included in all media)
b=* (zero or more bandwidth information lines).

One or more time descriptions ("t=" and "r=" lines; see below)
z=* (time zone adjustments)
k=* (encryption key)
a=* (zero or more session attribute lines)

Zero or more media descriptions
Time description
   t= (time the session is active)
   r=* (zero or more repeat times)
Media description, if present
   m= (media name and transport address)
   i=* (media title)
   c=* (connection information -- optional if included at session level)
   b=* (zero or more bandwidth information lines)
   k=* (encryption key)
   a=* (zero or more media attribute lines)

The set of type letters is deliberately small and not intended to be extensible - - an SDP parser MUST completely ignore any session description that contains a type letter that it does not understand.

The attribute mechanism ("a=" described below) is the primary means for extending SDP and tailoring it to particular applications or media. Some attributes have a defined meaning, but others may be added on an application, media-, or session-specific basis.

An SDP parser MUST ignore any attribute it doesn't understand.

An SDP session description may contain URIs that reference external content in the "u=", "k=", and "a=" lines. These URIs may be dereferenced in some cases, making the session description non-self-contained.

From the above, it is obvious that in order to extend SDP to support sessions for masks the fields "a=" and "u=" can be used. Other fields should correspond to the type of annotation mask that is transmitted, for example, for video-based pixel-map the "m=" field should have the values to support the codec used. We can define a new parameter 'smask' that held properties of a mask containing the mask type as type property that can indicate that it is a pixel-map (for other masks other types can be introduced); in this example we assume this parameter to be on a media-level.

Another property is the positioning of the mask with regards to a not aligned video picture. The "u=" field can be used to point to a location containing a dictionary and/or other metadata required for the annotation.

The example below shows a media presentation in SDP using H264 video codec, with the introduced annotation fields 'a' and 'u'.
m=video 49170 RTP/AVP 98
a=rtpmap:98 H264/90000
a=fmtp:98 profile-level-id=42A01 E;
sprop-parameter-sets=Z0IACpZTBYmI,aMIjiA==
a=smask:type:pixel-map anchor-x=100; anchor-y=200
u=https://example.com/annotation-dictionary.json

Multiple masks, potentially of different types can be offered at the SDP initialization stage and the application server / device can select the one desired at the response. The actual video data exchange is conducted using the existing mechanisms of RTP for the respective codec (e.g. the AVC/H264 of the example, RFC 3984. RTP Payload Format for H.264 Video. https://www.ietf.org/rfc/rfc3984.txt).

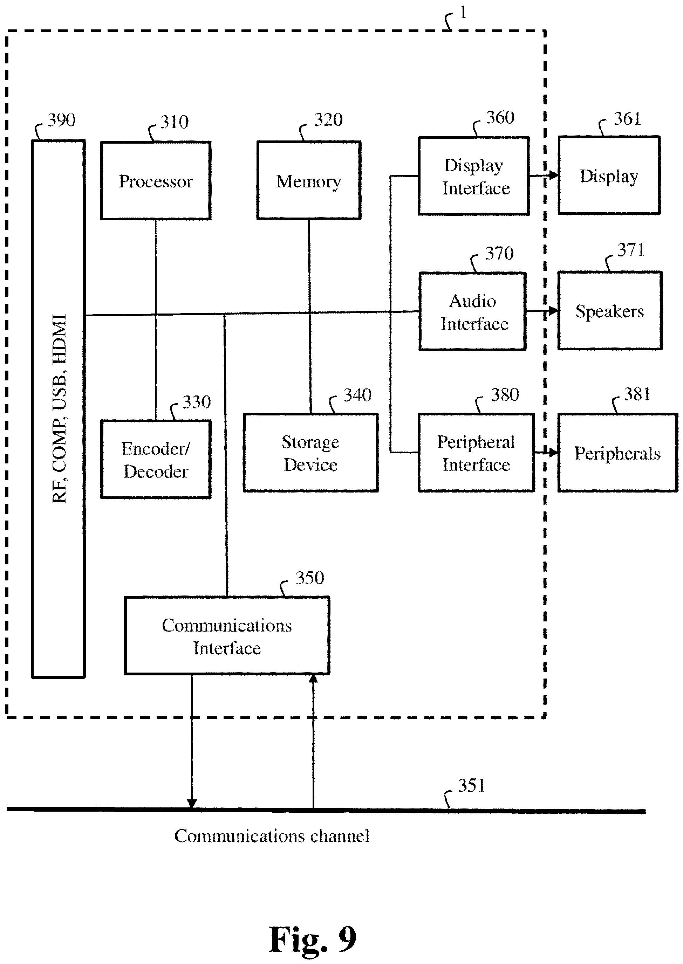

**Figure** 9 shows a schematic block diagram illustrating an example of the system 1 in which various aspects and exemplary embodiments are implemented.

System 1 may be embedded as at least a two remote devices including the various components described below. In various exemplary embodiments, system 1 may be configured to implement one or more of the aspects described in the present application.

Examples of equipment that may form all or part of the system 1 include personal computers, laptops, smartphones, tablet computers, digital multimedia set top boxes, digital television receivers, personal video recording systems, connected home appliances, connected vehicles and their associated processing systems, head mounted display devices (HMD, see-through glasses), projectors (beamers), "caves" (system including multiple displays), servers, video encoders, video decoders, post-processors processing output from a video decoder, pre-processors providing input to a video encoder, web servers, video servers (e.g. a broadcast server, a video-on-demand server or a web server), still or video camera, encoding or decoding chip or any other communication devices. Elements of system 1, singly or in combination, may be embodied in a single integrated circuit (IC), multiple ICs, and/or discrete components. For example, in at least one exemplary embodiment, the processing and encoder/decoder elements of system 1 may be distributed across multiple ICs and/or discrete components. In various exemplary embodiments, system 1 may be communicatively coupled to other similar systems, or to other electronic devices, via, for example, a communications bus or through dedicated input and/or output ports.

System 1 may include at least one processor 310 configured to execute instructions loaded therein for implementing, for example, the various aspects described in the present application. Processor 310 may include embedded memory, input output interface, and various other circuitries as known in the art. System 1 may include at least one memory 320 (for example a volatile memory device and/or a non-volatile memory device). System 1 may include a storage device 340, which may include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random-Access Memory (DRAM), Static Random-Access Memory (SRAM), flash, magnetic disk drive, and/or optical disk drive. The storage device 340 may include an internal storage device, an attached storage device, and/or a network accessible storage device, as non-limiting examples.

System 1 may include an encoder/decoder module 330 configured, for example, to process data to provide encoded/decoded video picture data, and the encoder/decoder module 330 may include its own processor and memory. The encoder/decoder module 330 may represent module(s) that may be included in a device to perform the encoding and/or decoding functions. As is known, a device may include one or both encoding and decoding modules. Additionally, encoder/decoder module 330 may be implemented as a separate element of system 1 or may be incorporated within processor 310 as a combination of hardware and software as known to those skilled in the art.

Program code to be loaded onto processor 310 or encoder/decoder 330 to perform the various aspects described in the present application may be stored in storage device 340 and subsequently loaded onto memory 320 for execution by processor 310. In accordance with various exemplary embodiments, one or more of processor 310, memory 320, storage device 340, and encoder/decoder module 330 may store one or more of various items during the performance of the processes described in the present application. Such stored items may include, but are not limited to video picture data, information data used for encoding/decoding video picture data, a bitstream, matrices, variables, and intermediate or final results from the processing of equations, formulas, operations, and operational logic.

In several exemplary embodiments, memory inside of the processor 310 and/or the encoder/decoder module 330 may be used to store instructions and to provide working memory for processing that may be performed during encoding or decoding.

In other exemplary embodiments, however, a memory external to the processing device (for example, the processing device may be either the processor 310 or the encoder/decoder module 330) may be used for one or more of these functions. The external memory may be the memory 320 and/or the storage device 340, for example, a dynamic volatile memory and/or a non-volatile flash memory. In several exemplary embodiments, an external non-volatile flash memory may be used to store the operating system of a television. In at least one exemplary embodiment, a fast external dynamic volatile memory such as a RAM may be used as working memory for video coding and decoding operations, such as for MPEG-2 part 2 (also known as ITU-T Recommendation H.262 and ISO/IEC 13818-2, also known as MPEG-2 Video), AVC, HEVC, EVC, VVC, AV1, etc.

The input to the elements of system 1 may be provided through various input devices as indicated in block 390. Such input devices include, but are not limited to, (i) an RF portion that may receive an RF signal transmitted, for example, over the air by a broadcaster, (ii) a Composite input terminal, (iii) a USB input terminal, (iv) an HDMI input terminal, (v) a bus such as CAN (Controller Area Network), CAN FD (Controller Area Network Flexible Data-Rate), FlexRay (ISO 17458) or Ethernet (ISO/IEC 802-3) bus when the present invention is implemented in the automotive domain.

In various exemplary embodiments, the input devices of block 390 may have associated respective input processing elements as known in the art. For example, the RF portion may be associated with elements necessary for (i) selecting a desired frequency (also referred to as selecting a signal, or band-limiting a signal to a band of frequencies), (ii) down-converting the selected signal, (iii) band-limiting again to a narrower band of frequencies to select (for example) a signal frequency band which may be referred to as a channel in certain exemplary embodiments, (iv) demodulating the down-converted and band-limited signal, (v) performing error correction, and (vi) demultiplexing to select the desired stream of data packets. The RF portion of various exemplary embodiments may include one or more elements to perform these functions, for example, frequency selectors, signal selectors, band-limiters, channel selectors, filters, downconverters, demodulators, error correctors, and demultiplexers. The RF portion may include a tuner that performs various of these functions, including, for example, down-converting the received signal to a lower frequency (for example, an intermediate frequency or a near-baseband frequency) or to baseband.

In one set-top box embodiment, the RF portion and its associated input processing element may receive an RF signal transmitted over a wired (for example, cable) medium. Then, the RF portion may perform frequency selection by filtering, down-converting, and filtering again to a desired frequency band.

Various exemplary embodiments rearrange the order of the above-described (and other) elements, remove some of these elements, and/or add other elements performing similar or different functions.

Adding elements may include inserting elements in between existing elements, such as, for example, inserting amplifiers and an analog-to-digital converter. In various exemplary embodiments, the RF portion may include an antenna.

Additionally, the USB and/or HDMI terminals may include respective interface processors for connecting system 1 to other electronic devices across USB and/or HDMI connections. It is to be understood that various aspects of input processing, for example, Reed-Solomon error correction, may be implemented, for example, within a separate input processing IC or within processor 310 as necessary. Similarly, aspects of USB or HDMI interface processing may be implemented within separate interface ICs or within processor 310 as necessary. The demodulated, error corrected, and demultiplexed stream may be provided to various processing elements, including, for example, processor 310, and encoder/decoder 330 operating in combination with the memory and storage elements to process the data stream as necessary for presentation on an output device.

Various elements of system 1 may be provided within an integrated housing. Within the integrated housing, the various elements may be interconnected and transmit data therebetween using suitable connection arrangement 390, for example, an internal bus as known in the art, including the I2C bus, wiring, and printed circuit boards.

The system 1 may include communication interface 350 that enables communication with other devices via communication channel 351. The communication interface 350 may include, but is not limited to, a transceiver configured to transmit and to receive data over communication channel 351. The communication interface 350 may include, but is not limited to, a modem or network card and the communication channel 351 may be implemented, for example, within a wired and/or a wireless medium.

Data may be streamed to system 1, in various exemplary embodiments, using a Wi-Fi network such as IEEE 802.11. The Wi-Fi signal of these exemplary embodiments may be received over the communications channel 351 and the communications interface 350 which are adapted for Wi-Fi communications. The communications channel 351 of these exemplary embodiments may be typically connected to an access point or router that provides access to outside networks including the Internet for allowing streaming applications and other over-the-top communications.

Other exemplary embodiments may provide streamed data to the system 1 using a set-top box that delivers the data over the HDMI connection of the input block 390.

Still other exemplary embodiments may provide streamed data to the system 1 using the RF connection of the input block 390.

The streamed data may be used as a way for signaling information used by the system 1. The signaling information may comprise a bitstream and/or information such a number of pixels of a video picture, any coding/decoding setup parameters, an alignment status, alignment reference data, overlap status, resampling data, interpolation data, and/or calibration data.

It is to be appreciated that signaling may be accomplished in a variety of ways. For example, one or more syntax elements, flags, and so forth may be used to signal information to a corresponding decoder in various exemplary embodiments.

System 1 may provide an output signal to various output devices, including a display (screen) 361, speakers 371, and other peripheral devices 381. The other peripheral devices 381 may include, in various examples of exemplary embodiments, one or more of a stand-alone DVR, a disk player, a stereo system, a lighting system, and other devices that provide a function based on the output of system 1.

In various exemplary embodiments, control signals may be communicated between the system 1 and the display 361, speakers 371, or other peripheral devices 381 using signaling such as AV.Link (Audio/Video Link), CEC (Consumer Electronics Control), or other communications protocols that enable device-to-device control with or without user intervention.

The output devices may be communicatively coupled to system 1 via dedicated connections through respective interfaces 360, 370, and 380.

Alternatively, the output devices may be connected to system 1 using the communications channel 351 via the communications interface 350. The display 361 and speakers 371 may be integrated in a single unit with the other components of system 1 in an electronic device such as, for example, a television.

In various exemplary embodiments, the display interface 360 may include a display driver, such as, for example, a timing controller (T Con) chip.

The display 361 and speaker 371 may alternatively be separate from one or more of the other components, for example, if the RF portion of input 390 is part of a separate set-top box. In various exemplary embodiments in which the display 361 and speakers 371 may be external components, the output signal may be provided via dedicated output connections, including, for example, HDMI ports, USB ports, or COMP outputs.

In **Figures 1-9****,** various methods are described herein, and each of the methods includes one or more steps or actions for achieving the described methods. Unless a specific order of steps or actions is required for proper operation of the method, the order and/or use of specific steps and/or actions may be modified or combined.

Some examples are described with regard to block diagrams and/or operational flowcharts. Each block represents a circuit element, module, or portion of code which includes one or more executable instructions for implementing the specified logical function(s). It should also be noted that in other implementations, the function(s) noted in the blocks may occur out of the indicated order. For example, two blocks shown in succession may, in fact, be executed substantially concurrently or the blocks may sometimes be executed in the reverse order, depending on the functionality involved.

The implementations and aspects described herein may be implemented in, for example, a method or a process, an apparatus, a computer program, a data stream, a bitstream, or a signal. Even if only discussed in the context of a single form of implementation (for example, discussed only as a method), the implementation of features discussed may also be implemented in other forms (for example, an apparatus or computer program).

The methods may be implemented in, for example, a processor, which refers to processing devices in general, including, for example, a computer, a microprocessor, an integrated circuit, or a programmable logic device. Processors also include communication devices.

Additionally, the methods may be implemented by instructions being performed by a processor, and such instructions (and/or data values produced by an implementation) may be stored on a computer readable storage medium, such as storage device 340 **(****Figure 9****)** for instance. A computer readable storage medium may take the form of a computer readable program product embodied in one or more computer readable medium(s) and having computer readable program code embodied thereon that is executable by a computer. A computer readable storage medium as used herein may be considered a non-transitory storage medium given the inherent capability to store the information therein as well as the inherent capability to provide retrieval of the information therefrom. A computer readable storage medium may be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present exemplary embodiments may be applied, is merely an illustrative and not an exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

The instructions may form an application program tangibly embodied on a processor-readable medium.

Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

An apparatus may be implemented in, for example, appropriate hardware, software, and firmware. Examples of such apparatus include personal computers, laptops, smartphones, tablet computers, digital multimedia set top boxes, digital television receivers, personal video recording systems, connected home appliances, head mounted display devices (HMD, see-through glasses), projectors (beamers), "caves" (system including multiple displays), servers, video encoders, video decoders, post-processors processing output from a video decoder, pre-processors providing input to a video encoder, web servers, set-top boxes, and any other device for processing video pictures or other communication devices. As should be clear, the equipment may be mobile and even installed in a mobile vehicle.

Computer software may be implemented by the processor 310 or by hardware, or by a combination of hardware and software. As a non-limiting example, the exemplary embodiments may be also implemented by one or more integrated circuits. The memory 320 may be of any type appropriate to the technical environment and may be implemented using any appropriate data storage technology, such as optical memory devices, magnetic memory devices, semiconductor-based memory devices, fixed memory, and removable memory, as non-limiting examples. The processor 310 may be of any type appropriate to the technical environment, and may encompass one or more of microprocessors, general purpose computers, special purpose computers, and processors based on a multi-core architecture, as non-limiting examples.

As will be apparent to one of ordinary skill in the art based on the present application, implementations may produce a variety of signals formatted to carry information that may be, for example, stored or transmitted. The information may include, for example, instructions for performing a method, or data produced by one of the described implementations. For example, a signal may be formatted to carry the bitstream of a described exemplary embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

The terminology used herein is for the purpose of describing particular exemplary embodiments only and is not intended to be limiting. As used herein, the singular forms "a", "an", and "the" may be intended to include the plural forms as well, unless the context clearly indicates otherwise. It will be further understood that the terms "includes/comprises" and/or "including/comprising" when used in this specification, may specify the presence of stated, for example, features, integers, steps, operations, elements, and/or components but do not preclude the presence or addition of one or more other features, integers, steps, operations, elements, components, and/or groups thereof. Moreover, when an element is referred to as being "responsive" or "connected" or "associated with" to another element, it may be directly responsive or connected to or associated with the other element, or intervening elements may be present. In contrast, when an element is referred to as being "directly responsive" or "directly connected" to or "directly associated with" other element, there are no intervening elements present.

It is to be appreciated that the use of any of the symbol/term "/", "and/or", and "at least one of", for example, in the cases of "A/B", "A and/or B" and "at least one of A and B", may be intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed. Various numeric values may be used in the present application. The specific values may be for example purposes and the aspects described are not limited to these specific values.

It will be understood that, although the terms first, second, etc. may be used herein to describe various elements, these elements are not limited by these terms. These terms are only used to distinguish one element from another. For example, a first element could be termed a second element, and, similarly, a second element could be termed a first element without departing from the teachings of the present application. No ordering is implied between a first element and a second element.

Reference to "one exemplary embodiment" or "an exemplary embodiment" or "one implementation" or "an implementation", as well as other variations thereof, is frequently used to convey that a particular feature, structure, characteristic, and so forth (described in connection with the embodiment/implementation) is included in at least one embodiment/implementation. Thus, the appearances of the phrase "in one exemplary embodiment" or "in an exemplary embodiment" or "in one implementation" or "in an implementation", as well any other variations, appearing in various places throughout the present application are not necessarily all referring to the same exemplary embodiment.

Similarly, reference herein to "in accordance with an exemplary embodiment/example/implementation" or "in an exemplary embodiment/example/implementation", as well as other variations thereof, is frequently used to convey that a particular feature, structure, or characteristic (described in connection with the exemplary embodiment/example/implementation) may be included in at least one exemplary embodiment/example/implementation. Thus, the appearances of the expression "in accordance with an exemplary embodiment/example/implementation" or "in an exemplary embodiment/example/implementation" in various places in the present application are not necessarily all referring to the same exemplary embodiment/example/implementation, nor are separate or alternative exemplary embodiments/examples/implementations necessarily mutually exclusive of other exemplary embodiments/examples/implementations.

Reference numerals appearing in the claims are by way of illustration only and shall have no limiting effect on the scope of the claims. Although not explicitly described, the present exemplary embodiments/examples and variants may be employed in any combination or sub-combination.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Although some of the diagrams include arrows on communication paths to show a primary direction of communication, it is to be understood that communication may occur in the opposite direction to the depicted arrows.

Various implementations involve decoding. "Decoding", as used in this application, may encompass all or part of the processes performed, for example, on a received video sequence (including possibly a received bitstream which encodes one or more video sequences) in order to produce a final output suitable for display or for further processing in the reconstructed video domain. In various exemplary embodiments, such processes include one or more of the processes typically performed by a decoder. In various exemplary embodiments, such processes also, or alternatively, include processes performed by a decoder of various implementations described in the present application.

As further examples, in one exemplary embodiment "decoding" may refer only to de-quantizing, in one exemplary embodiment "decoding" may refer to entropy decoding, in another exemplary embodiment "decoding" may refer only to differential decoding, and in another exemplary embodiment "decoding" may refer to combinations of de-quantizing, entropy decoding and differential decoding. Whether the phrase "decoding process" may be intended to refer specifically to a subset of operations or generally to the broader decoding process will be clear based on the context of the specific description and is believed to be well understood by those skilled in the art.

Various implementations involve encoding. In an analogous way to the above discussion about "decoding", "encoding" as used in the present application may encompass all or part of the processes performed, for example, on an input video sequence in order to produce an output bitstream. In various exemplary embodiments, such processes include one or more of the processes typically performed by an encoder. In various exemplary embodiments, such processes also, or alternatively, include processes performed by an encoder of various implementations described in this application.

As further examples, in one exemplary embodiment "encoding" may refer only to quantizing, in one exemplary embodiment "encoding" may refer only to entropy encoding, in another exemplary embodiment "encoding" may refer only to differential encoding, and in another exemplary embodiment "encoding" may refer to combinations of quantizing, differential encoding and entropy encoding. Whether the phrase "encoding process" may be intended to refer specifically to a subset of operations or generally to the broader encoding process will be clear based on the context of the specific descriptions and is believed to be well understood by those skilled in the art.

Additionally, the present application may refer to "obtaining" various pieces of information. Obtaining the information may include one or more of, for example, estimating the information, calculating the information, predicting the information, or retrieving the information from memory, processing the information, moving the information, copying the information, erasing the information, calculating the information, determining the information, predicting the information, or estimating the information.

Additionally, this application may refer to "receiving" various pieces of information. Receiving the information may include one or more of, for example, accessing the information, or receiving information from a communication network.

Also, as used herein, the word "signal" refers to, among other things, indicating something to a corresponding decoder. For example, in certain exemplary embodiments the encoder signals a particular information such as coding parameter or encoded video picture data. In this way, in an exemplary embodiment the same parameter may be used at both the encoder side and the decoder side. Thus, for example, an encoder may transmit (explicit signaling) a particular parameter to the decoder so that the decoder may use the same particular parameter. Conversely, if the decoder already has the particular parameter as well as others, then signaling may be used without transmitting (implicit signaling) to simply allow the decoder to know and select the particular parameter. By avoiding transmission of any actual functions, a bit savings is realized in various exemplary embodiments. It is to be appreciated that signaling may be accomplished in a variety of ways. For example, one or more syntax elements, flags, and so forth are used to signal information to a corresponding decoder in various exemplary embodiments. While the preceding relates to the verb form of the word "signal", the word "signal" may also be used herein as a noun.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method (200) of obtaining, by a capture apparatus, at least one segmented object extracted from a video, wherein the method comprises the following steps:
- obtaining (210) said at least one segmented object from the video or at least a part of the video by applying an object segmentation process on the video;
- generating (220) first metadata representative of a semantical annotation map comprising said at least one mask, each mask being representative of at least one segmented object;
- writing (230) the first metadata in a container;
- transmitting (240) the container to a target device over a communication network.

2. The method of claim 1, wherein the capture apparatus further generates and writes (250) second metadata in the container, said second metadata being required to obtain and/or to process and/or to interpret the semantical annotation map.

3. The method of one of previous claims, wherein the method further comprises writing (260), by the capture apparatus, in the container, video picture data corresponding to the semantical annotation map.

4. The method of one of claims 1 to 3, wherein the masks of the semantical annotation map are pixel-masks formatted according to an image or video format.

5. The method of one of claims 1 to 3, wherein the masks of the semantical annotation map are binary pixel-masks, each pixel mask indicates whether an object is present at that pixel that mask is covering.

6. The method of claim 5, wherein a binary pixel-mask is representative of multiple segmented objects.

7. The method of one of claims 1 to 3, wherein the masks of the semantical annotation map are polygon masks, or key-point masks formatted according to a vector graphics format.

8. The method of one of claims 1 to 7, wherein the masks of the semantical annotation map are written in the container formatted according to a structured text format.

9. The method of claim 8, wherein the container contains both a main video track and an auxiliary video track associated with a video-coded mask, said video-coded mask being obtained by coding a mask as a video.

10. The method of claim 9, wherein the container further comprises a track reference box ('segm') to indicate the auxiliary video track associated with each video-coded mask complements the main video track.

11. The method of claim 8, wherein the container contains both a main video track and an auxiliary track associated with each mask coded according to an image compression scheme.

12. The method of claim 8, wherein the container contains a main video track and an auxiliary track associated with masks coded according to a specific compression scheme defined for masks.

13. The method of claim 8, wherein the container contains a primary track that encapsulates a semantical annotation map.

14. A method (410) of obtaining by a target device, at least one segmented object extracted from a video, wherein the method comprises the following steps executed by the target device:
- receiving (410) a container from a communication network, said container being obtained by a method according to one of claims 1 to 13;
- obtaining (420) a semantical annotation map by parsing first metadata in the received container; and
- obtaining (430) said at least one segmented object from the semantical annotation map.

15. A non-transitory storage medium carrying instructions of program code for executing a method claimed in any one of claims 1 to 14.

16. A capture apparatus, comprising:
- a process unit (310), configured to perform obtaining (210) at least one segmented object extracted from a video or at least a part of a video, said at least one segmented object being extracted by applying an object segmentation process on the video, generating (220) first metadata representative of a semantical annotation map comprising at least one mask, each mask being representative of said at least one segmented object, and writing (230) the first metadata in a container; and
- a transmission unit (350, 351, 390), configured to perform transmitting (240) the container to a target device over a communication network.

17. A target device, comprising:
- a receiving unit (350, 351, 390), configured to perform receiving (410) a container from a communication network, said container being obtained by a method according to one of claims 1 to 13 ; and
- a process unit (310) configured to perform obtaining (420) a semantical annotation map by parsing first metadata in the received container; and obtaining (430) said at least one segmented object from the semantical annotation map.

18. A container formatted to comprise first metadata obtained by a method according to one of claims 1 to 13, said first metadata being representative of a semantical annotation map comprising at least one mask, each mask being representative of at least one segmented object of a video picture, wherein the container is a ISOBMFF formatted file that conforms to the standard ISO/IEC 14496-12 or one of its derivatives.

19. The container of claim 18, wherein the container is fragmented into multiple network elements intended to be transmitted over a communication network.
